# EUROPÄISCHE PATENTSCHRIFT

(11) **EP 2 662 241 B1**
(45) Veröffentlichungstag und Bekanntmachung des Hinweises auf die Patenterteilung: **03.01.2018**
(21) Anmeldenummer: 13002116.5
(22) Anmeldetag: 23.04.2013
(51) Int. Cl.: B60Q 3/74, B60Q 3/51, B60Q 3/64

(54) **Kraftfahrzeug, umfassend einen Dachhimmel**
Motor vehicle, with a roof liner
Véhicule comprenant un ciel de toit

(30) Priorität: 08.05.2012 DE 102012009170
(43) Veröffentlichungstag der Anmeldung: 13.11.2013
(73) Patentinhaber: AUDI AG, 85045 Ingolstadt (DE)
(72) Erfinder: Moussa, Ahmed, 85051 Ingolstadt (DE)
(74) Vertreter: Thielmann, Frank

(56) Entgegenhaltungen:
- EP-A1- 2 287 042
- EP-A2- 1 052 145
- JP-A- 2008 001 130

## Beschreibung

Die Erfindung betrifft ein Kraftfahrzeug, umfassend einen Dachhimmel.

Im Dachhimmel eines Kraftfahrzeugs ist üblicherweise wenigstens eine Leuchte verbaut, die zumeist der Raumbeleuchtung dient, also in das Wageninnere abstrahlt. Mitunter ist auch ein komplettes Leuchtenmodul verbaut, das neben einer derartigen Raumleuchte auch zwei im Wesentlichen punktuell ausleuchtende Leseleuchten umfasst. Diese Art der Beleuchtung dient also der Raumausleuchtung, sei es großräumig im Falle der eigentlichen Raumleuchte, sei es begrenzt im Falle der Leseleuchte. Diese Leuchten werden nur im Bedarfsfall zugeschaltet. Im Falle der Raumleuchte üblicherweise automatisch beim Öffnen einer Fahrzeugtür oder gezielt, wenn im Fahrzeuginneren Licht benötigt wird, die Leseleuchten nur dann, wenn der Fahrer oder Beifahrer beispielsweise in einer Karte oder dergleichen etwas nachlesen möchte.

Ferner sind in modernen Kraftfahrzeugen mitunter Leuchteinrichtungen verbaut, die zur Erzeugung eines Ambientelichts dienen, mithin also dazu dienen, dauerhaft ein bestimmtes Hintergrundlicht in bestimmten Bereichen des Fahrzeugs zu emittieren, das als angenehm empfunden und ein positives Raumgefühl verleiht. Diese Leuchteinrichtungen sind beispielsweise im Bereich des Fußraums des Fahrers und Beifahrers wie auch der hinteren Sitzreihe verbaut, so dass diese Fußraumbereiche leicht illuminiert werden können. Zwar ist es möglich, hiermit quasi den Bodenbereich auszuleuchten, jedoch wird diese Ausleuchtung über die im Fahrzeug sitzenden Personen kaum wahrgenommen. Ein gattungsgemäßes Kraftfahrzeug ist aus EP 1 052 145 bekannt.

Der Erfindung liegt damit das Problem zugrunde, ein Kraftfahrzeug anzugeben, das die Erzeugung eines wahrnehmbaren Ambientelichts ermöglicht. Dieses Problem wird erfindungsgemäß durch ein Kraftfahrzeug mit den Merkmalen des Patentanspruchs 1 gelöst. Beim erfindungsgemäßen Fahrzeug ist himmelseitig eine Leuchteinrichtung integriert, die so angeordnet ist, dass sie ihr Licht direkt und ausschließlich auf die zum Fahrzeuginneren weisende Himmelseite abstrahlt. Der Himmel dient also als Bestrahlungs- oder Projektionsfläche, er wird unmittelbar beleuchtet. Die Leuchteinrichtung emittiert ausschließlich in Richtung des Dachhimmels, nicht aber unmittelbar in das Fahrzeuginnere.

Es handelt sich um eine längliche Leuchteinrichtung, die sich über einen Teil der Himmellänge erstreckt, mithin also in Richtung der Fahrzeuglängsachse verläuft, oder die sich über einen Teil der Himmelbreite erstreckt, also in diesem Fall quer zur Fahrzeuglängsrichtung verläuft. Die längliche Leuchteinrichtung emittiert über ihre gesamte Länge das Licht, so dass der Dachhimmel folglich großflächig beleuchtet werden kann.

Der Dachhimmel "leuchtet" bei Bestrahlung also großflächig, der beleuchtungsbedingte Helligkeitsunterschied zum nicht beleuchteten Himmelbereich ist optisch erkennbar und wird von den im Fahrzeug befindlichen Personen auch entsprechend wahrgenommen. Der beleuchtete Dachhimmel leuchtet natürlich indirekt wiederum etwas das Fahrzeuginnere aus, bildet also selbst eine quasi Lichtabstrahlfläche, die großflächig das Ambientelicht in den Raum verteilt. Da der Himmel selbst eine beachtlich große Fläche besitzt, kann folglich unter Verwendung einer derartigen Leuchteinrichtung auch eine große Ambientenleuchtfläche erzeugt werden, die nicht ein nur mehr oder weniger begrenztes Ausleuchtvolumen besitzt, wie im Falle der Fußraumausleuchtung, sondern sehr großflächig ist und einen großen Bereich der Fahrgastzelle in ein angenehmes Ambientelicht taucht.

Grundsätzlich besteht die Möglichkeit, nur eine Leuchteinrichtung zu verwenden, die beispielsweise in der Himmelmitte in Fahrzeuglängsrichtung oder quer zur Fahrzeuglängsrichtung verläuft und zu beiden Seiten hin den Himmel beleuchtet. Bevorzugt jedoch sind zwei in Fahrzeuglängsrichtung verlaufende und an beiden einander gegenüberliegenden Himmelseiten angeordnete Leuchteinrichtungen vorgesehen, wie alternativ natürlich auch zwei in Fahrzeugquerrichtung verlaufende und an den beiden einander gegenüberliegenden Himmelseiten angeordnete Leuchteinrichtungen integriert werden können. Die beiden Leuchteinrichtungen beleuchten folglich den Himmel von zwei einander gegenüberliegenden Seiten, so dass sich insgesamt eine weitgehend homogene Himmelbeleuchtung ergibt, zumindest eine symmetrische Himmelbeleuchtung.

Wie ausgeführt ist die Leuchteinrichtung länglich, sie bietet die Möglichkeit, über nahezu ihre gesamte Länge Licht zu emittieren. Dies lässt sich besonders vorteilhaft mit einem Lichtleiter realisieren, der seitlich Licht abstrahlt. Das heißt, jede Leuchteinrichtung umfasst einen länglichen Lichtleiter, der beispielsweise eine Länge von einem halben Meter oder einem Meter oder länger besitzt, und der über seine gesamte Länge seitlich Licht emittiert, was über eine geeignete Strukturierung der Außenseite des Lichtleiters möglich ist. Das heißt, dass stirnseitig eingekoppeltes Licht über die Lichtleiterlänge zur Leiterseite ausgekoppelt wird, wobei der Lichtleiter so angeordnet ist, dass dieses Licht dann unmittelbar auf den Dachhimmel abgestrahlt wird. Auf diese Weise lässt sich zum einen sehr einfach eine über eine beachtliche Strecke erfolgende Lichtemission realisieren, zum anderen ist ein solcher Lichtleiter, da relativ schmal, auch ohne weiteres fahrzeugseitig respektive himmelseitig integrierbar. Alternativ zu einem Lichtleiter kann auch ein Leuchtband umfassend eine Vielzahl einzelner kleiner Lichtquellen, insbesondere einzelne LEDs verwendet werden.

Um die Leuchteinrichtung, insbesondere den Lichtleiter, auf möglichst einfache Weise integrieren zu können, sieht die Erfindung vor, an der Rückseite des Dachhimmels eine längliche Befestigungsleiste anzuordnen, an der wenigstens eine Halterung, an der die Leuchteinrichtung, insbesondere der Lichtleiter gehaltert ist, befestigt ist. Diese Befestigungsleiste, die bevorzugt an der Himmelrückseite festgeklebt wird, bildet auf einfache Weise eine nicht sichtbare Befestigungsmöglichkeit für eine entsprechende Halterung, an der die Leuchteinrichtung ihrerseits festgelegt ist. Über die Befestigungsleiste kann weiterhin sichergestellt werden, dass kein Licht hinter den Dachhimmel emittiert wird, sondern dass nahezu das gesamte von der Leuchteinrichtung, insbesondere dem Lichtleiter emittierte Licht, auch tatsächlich zum Dachhimmel hin abgestrahlt wird.

Die Halterung, die der Befestigung respektive Fixierung der Leuchteinrichtung dient, ist erfindungsgemäß als Halteleiste ausgeführt, die von der Himmelvorderseite her in die Befestigungsleiste eingreift. In diese Halteleiste ist die Leuchteinrichtung, insbesondere der Lichtleiter, eingesetzt respektive an ihr fixiert. Das heißt, dass die Befestigungsanordnung folglich zwei einfache Leistenbauteile, von denen das eine an der Himmelrückseite, das andere von der Vorderseite her angesetzt wird, umfasst. Diese beiden Leisten sind bevorzugt als einfache Kunststoffbauteile ausgeführt, so dass sie einerseits sehr leicht sind, und andererseits auch einfach herstellbar sind.

Zur Verbindung der Halte- mit der Befestigungsleiste sind vorzugsweise entsprechende Rastabschnitte an den Leisten vorgesehen, das heißt, dass beide Leisten miteinander verrasten, dabei den Dachhimmel zwischen sich aufnehmend.

Wie beschrieben ist die Befestigungsleiste himmelrückseitig befestigt, vorzugsweise angeklebt, während die Halteleiste nebst Leuchteinrichtung von der Himmelvorderseite her angesetzt wird und bevorzugt verrastend in die Befestigungsleiste eingreift. Hierzu können die beiden Leisten am Himmelrand angeordnet werden, so dass sie zwischen sich die Himmelkante aufnehmen. Da jedoch die Leuchteinrichtung nicht unbedingt randseitig anzubringen ist, sondern bevorzugt im Übergangsbereich des Dachhimmels in einen mehr oder weniger horizontal liegenden mittleren Himmelabschnitt, und nicht zuletzt aufgrund einer zumeist etwas komplexeren Himmelgeometrie im Randbereich, sieht eine zweckmäßige Weiterbildung der Erfindung vor, dass im Dachhimmel ein Längsschlitz vorgesehen ist, durch den die Halteleiste hindurchgreift. Dieser Schlitz kann an beliebiger Position im Dachhimmel vorgesehen sein. An der Himmelrückseite ist, quasi den Schlitz übergreifend, die Befestigungsleiste vorgesehen, die Halteleiste wird von der Himmelvorderseite mit ihrem Befestigungs- oder Rastabschnitt durch den Schlitz gesteckt und mit der Befestigungsleiste verrastet. Der Schlitz ist selbstverständlich in der Montagestellung vollkommen abgedeckt, mithin also von der Innenseite her nicht sichtbar. Lediglich die Halteleiste ist sichtbar, ihr wird selbstverständlich ein entsprechendes Äußeres verliehen, damit sie eine ansprechende Optik besitzt. Auch dies ist ohne weiteres möglich, wenn die Halteleiste als Kunststoffleiste ausgeführt wird, da die Außenseite dieser Kunststoffleiste ohne weiteres entsprechend strukturiert oder mit einer optisch ansprechenden Laminatschicht belegt oder auch metallisiert oder dergleichen sein kann.

Nach einer besonders zweckmäßigen Weiterbildung der Erfindung ist vorgesehen, dass die Leuchteinrichtung nicht einsehbar hinter einer Abschirmung angeordnet ist. Das heißt, dass der Leuchteinrichtung Abschirmmittel zugeordnet sind, die sie so abschirmen, dass emittiertes Licht nur über einen schmalen Spalt zum Dachhimmel gelangt, keinesfalls aber in den Fahrgastraum strahlt. Über diese Abschirmung wird sichergestellt, dass die im Fahrzeug befindlichen Personen die Leuchteinrichtung, also beispielsweise den längslaufenden Lichtleiter, nicht sehen. Für die Personen ist lediglich die Abschirmung sichtbar, die gemäß einer besonders vorteilhaften Weiterbildung über die Halteleiste selbst realisiert wird und, wie oben ausgeführt, dann auch sehr ansprechend ausgestaltet werden kann. Zu diesem Zweck weist die Halteleiste einen die Leuchteinrichtung, insbesondere den Lichtleiter übergreifenden, die Abschirmung bildenden Steg auf, hinter dem die Leuchteinrichtung, insbesondere der Lichtleiter, angeordnet ist. Dieser Steg ist so geführt, dass er einerseits beispielsweise den Lichtleiter vollständig abdeckt, zum anderen verbleibt über diesen Steg ein Spalt, dessen Breite respektive Öffnungswinkel so ausgelegt ist, dass das quasi dahinter emittierte Licht der Leuchteinrichtung über diesen Spalt gezielt und ausschließlich auf den Dachhimmel emittiert wird.

Bevorzugt weist der Dachhimmel eine als Beleuchtungsfläche dienende Bespannung auf, die vor einem stabilen Himmelbauteil verläuft. Diese Bespannung kann eine bestimmte Farbe, beispielsweise silber oder beige, besitzen, also eine helle Farbe, auf der sich andere Lichtfarben, die über die Leuchteinrichtung darauf projiziert werden können, gut und farbtreu abheben. Denn es ist grundsätzlich möglich, über die Leuchteinrichtung unterschiedlich farbiges Licht auf den Dachhimmel abzustrahlen, wozu bevorzugt mehrere unterschiedlich farbiges Licht emittierende, separat ansteuerbare Lichtquellen, deren Licht in die Leuchteinrichtung, insbesondere den Lichtleiter, einkoppelbar ist, vorgesehen sind. Dies ermöglicht es dem Fahrer oder Beifahrer, je nach Wunsch eine bestimmte Ambientenlichtfarbe anzuwählen, beispielsweise über ein entsprechendes Anwahlmenü, das an einem fahrzeugseitig integrierten Display aufrufbar und über ein geeignetes Bedienelement wie beispielsweise eine Dreh-Drück-Stelle anwählbar ist. Das heißt, dass die im Fahrzeug befindlichen Personen selbst entscheiden können, ob sie nun beispielsweise ein rotes, gelbes, grünes oder blaues Ambientelicht bevorzugen. Diese Lichtfarbe wird, nachdem bevorzugt eine helle Bespannungsfarbe (oder, sollte eine solche Bespannung nicht vorgesehen sein, eine helle Himmelfarbe an sich) gewählt ist, farbneutral über dem Dachhimmel wiedergegeben. Der Dachhimmel selbst oder die Bespannung kann hierzu auch leicht reflektierende Eigenschaften besitzen, um die Lichtabstrahlung zur Fahrgastzelle hin zu verbessern.

Ist eine solche Bespannung vorgesehen, so kann diese Bespannung an der Halteleiste selbst fixiert sein. Das heißt, dass die Halteleiste nicht nur als Träger der Leuchteinrichtung, sondern auch als Bespannungsträger dient.

Gemäß einer zweckmäßigen Weiterbildung ist vorgesehen, dass die Helligkeit der Leuchteinrichtung variierbar ist. Auch dies kann ohne weiteres nach Bedarf eingestellt werden, wiederum beispielsweise über ein entsprechendes Anwahlmenü an einem Fahrzeugdisplay. Hierüber kann nach Bedarf folglich die Intensität und Helligkeit des Ambientelichts eingestellt werden. Dies gilt selbstverständlich unabhängig davon, ob nur eine Lichtquelle vorgesehen ist, die nur eine bestimmte Lichtfarbe emittiert, oder ob mehrere unterschiedliche Lichtfarben emittierende und separat ansteuerbare Lichtquellen vorgesehen sind. Hierzu dient selbstverständlich eine entsprechende Steuerungseinrichtung, die dem Lichtquellenbetrieb dient respektive diesen steuert.

Weitere Vorteile, Merkmale und Einzelheiten der Erfindung ergeben sich aus dem im Folgenden beschriebenen Ausführungsbeispiel sowie anhand der Zeichnungen. Dabei zeigen:
- Fig. 1: eine Prinzipdarstellung eines erfindungsgemäßen Kraftfahrzeugs,
- Fig. 2: eine Darstellung des Dachhimmels nebst Leuchteinrichtung in einer Explosionsansicht,
- Fig. 3: eine Schnittansicht durch einen Dachhimmel mit verbauter Leuchteinrichtung,
- Fig. 4: eine Prinzipdarstellung in Form einer Schnittansicht durch den Dachhimmel mit verbauter Leuchteinrichtung, in einer Teilansicht, und
- Fig. 5: eine Schnittansicht entsprechend Fig. 4 im Bereich einer Rastverbindung der Halteleiste mit der Befestigungsleiste.

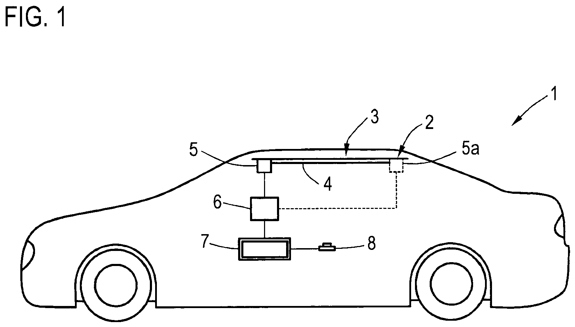

Fig. 1 zeigt ein erfindungsgemäßes Kraftfahrzeug 1, umfassend einen Dachhimmel 2, an dem, in Fahrzeuglängsrichtung verlaufend, eine Leuchteinrichtung 3 umfassend einen in der Montagestellung selbstverständlich unsichtbar versteckten Lichtleiter 4 sowie im gezeigten Beispiel wenigstens eine Lichtquelle 5, vorzugsweise eine LED, die Licht emittiert, das in den Lichtleiter eingekoppelt wird, der das Licht über seine Länge seitlich auskoppelt und hierüber den Dachhimmel 2 beleuchtet, worauf nachfolgend noch eingegangen wird.

Der Leuchteinrichtung 3 zugeordnet ist ferner eine Steuerungseinrichtung 6, die den Betrieb der Lichtquelle 5 steuert. Die Steuerungseinrichtung 6 wiederum wird bedienerseitig über ein Display 7 und ein zugeordnetes Eingabe- oder Bedienmittel 8, beispielsweise einen Dreh-Drück-Steller, entsprechend gesteuert, um einerseits die Leuchteinrichtung 3, die ein Ambientelicht bildet, ein- und auszuschalten wie auch die Helligkeit zu variieren, oder - wenn die Lichtquelle 5 mehrere separate, unterschiedliches farbiges Licht emittierende Lichtquellen, beispielsweise einzelne LEDs umfasst - die entsprechende gewünschte Lichtfarbe einzustellen.

Fig. 1 zeigt ferner exemplarisch gestrichelt eine zweite Lichtquelle 5a, die an der anderen Lichtleiterseite vorgesehen sein kann und über die Steuerungseinrichtung 6 ebenfalls angesteuert wird. Dies ermöglicht es, Licht von beiden Seiten in den Lichtleiter einzukoppeln und so sicherzustellen, dass das Licht über seine gesamte Länge homogen emittiert wird.

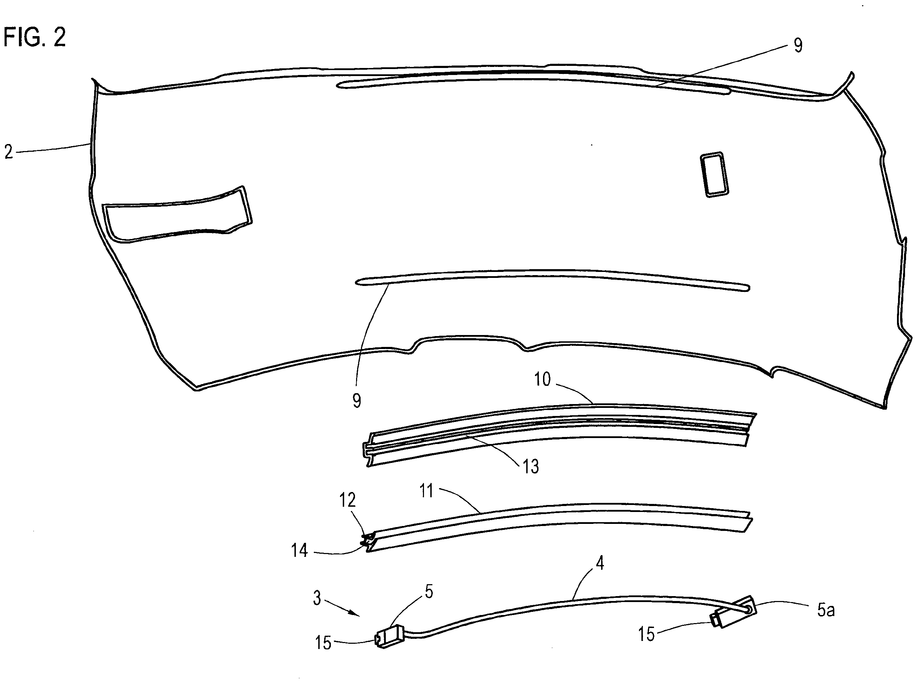

Fig. 2 zeigt in Form einer Explosionsansicht die wesentlichen Bauteile des Dachhimmels 2 nebst Leuchteinrichtung 3. Der Dachhimmel 2, üblicherweise ein Kunststoffformteil, weist im Bereich seiner beiden Längsränder zwei Schlitze 9 auf. Diese dienen der Fixierung der Leuchteinrichtung 3. Hierzu dient eine Befestigungsanordnung, die eine Befestigungsleiste 10 umfasst, die an der Rückseite des Dachhimmels 2 angeordnet wird, vorzugsweise festgeklebt wird. Sie umfasst ferner eine Halteleiste 11, die von der Vorderseite des Dachhimmels 2 her angesetzt wird und mit rückseitigen Eingriffsstegen 12 in eine entsprechende Eingriffsnut 13 der Befestigungsleiste 10 eingreift. Über nachfolgend noch beschriebene Rasthaken an einem dieser Eingriffsstege 12, die in der Montagestellung in entsprechende Rastaufnahmen an der Befestigungsleiste 10 einschnappen, wird die Halteleiste 11 festgelegt.

Gezeigt ist ferner der Lichtleiter 4, der über die Halteleiste 11 fixiert wird. Hierzu weist die Halteleiste 11 eine Haltenut 14 auf, in die der Lichtleiter 4 eingelegt ist, und in der er fixiert ist. An den beiden Enden des Lichtleiters sind hier exemplarisch die beiden Lichtquellen 5, 5a gezeigt, die über entsprechende Anschlüsse 15 mit der Steuerungseinrichtung 6 gekoppelt werden können.

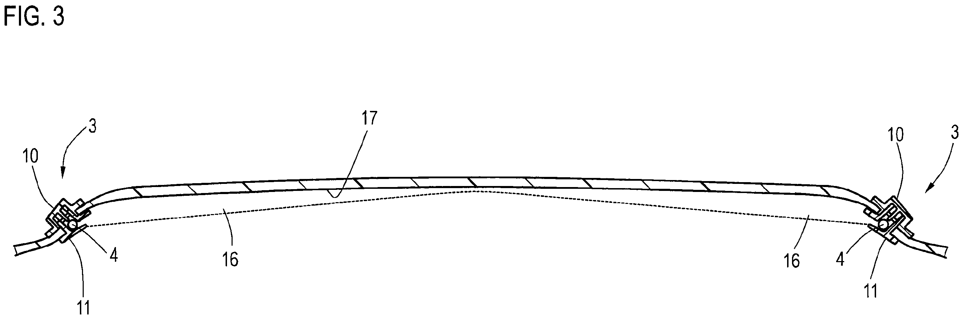

Wie beschrieben sind am Dachhimmel 2 zwei Schlitze 9 vorgesehen, denen jeweils eine Leuchteinrichtung 3 nebst Befestigungsanordnung zugeordnet ist. Eine Schnittansicht durch einen Dachhimmel 2 mit verbauten Leuchteinrichtungen 3 zeigt Fig. 3. Ersichtlich befinden sich die beiden Leuchteinrichtungen 3 im Bereich der Längsränder des Dachhimmels 2. Gezeigt ist jeweils die Befestigungsleiste 10, die Halteleiste 11 sowie der Lichtleiter 4. Gestrichelt ist jeweils der Ausleuchtbereich 16 gezeigt, der über den Lichtleiter 4 beleuchtet wird. Ersichtlich sind die beiden Lichtleiter 4 so in der jeweiligen Halteleiste 11 angeordnet, die wiederum entsprechend in der Befestigungsleiste 10 fixiert ist, dass das Licht, das vom Lichtleiter 4 seitlich emittiert wird, nur auf die Innenfläche 17 des Dachhimmels abgestrahlt wird, nicht aber zum Inneren der Fahrgastzelle. Das heißt, dass folglich die Innenfläche 17 des Dachhimmels 2 eine Beleuchtungs- oder Projektionsfläche darstellt, auf die ausschließlich das Licht der Lichtleiter 4 gestrahlt wird. Die Halteleisten 11 sind so ausgelegt, dass der gebildete Lichtaustrittsschlitz sich in einer Weise öffnet, dass sichergestellt ist, dass durch Zusammenwirken der beiden Lichtleiter 4 die gesamte Dachhimmelfläche, in der Breite gesehen, beleuchtet wird, wie in Fig. 3 dargestellt ist. Ersichtlich überlappen sich quasi die Leuchtabschnitte in der Himmelmitte, so dass der gesamte Dachhimmel beleuchtet wird, wobei die Helligkeit von einem äußeren Rand zur Himmelmitte etwas abnimmt. Beide Leuchteinrichtungen 3 werden selbstverständlich simultan betrieben.

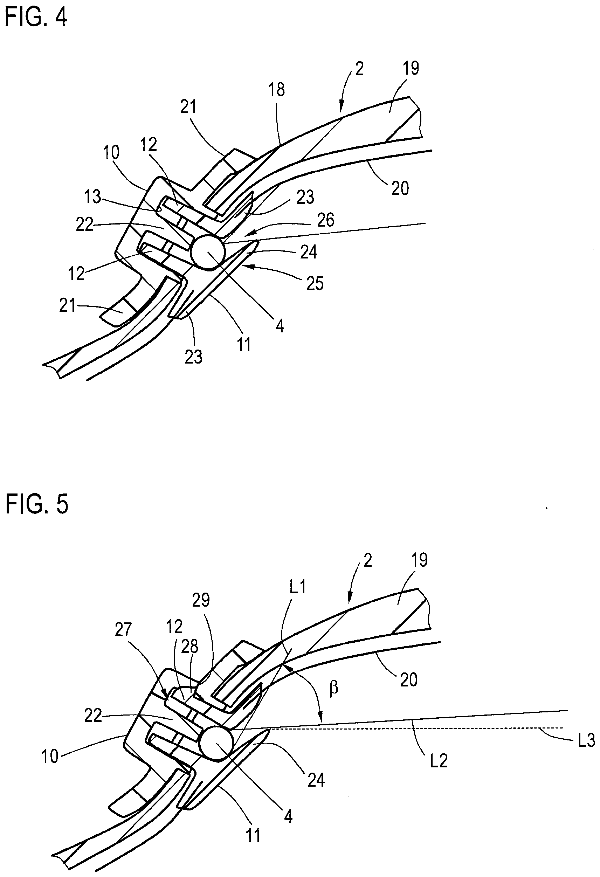

Fig. 4 zeigt in einer vergrößerten Prinzipdarstellung eine Schnittansicht durch die Leuchteinrichtung 3 nebst Befestigungsanordnung aus Fig. 3, die im linken Bereich des Dachhimmels angeordnet ist. Gezeigt ist die Befestigungsleiste 10, die an der Rückseite 18 des Dachhimmels 2 befestigt ist. Der Dachhimmel 2 besteht hier aus einem stabilen Himmelbauteil 19, auf dessen Rückseite 18 die Befestigungsleiste 10 verklebt ist, und einer das Himmelbauteil 19 innenseitig belegenden bzw. verkleidenden Bespannung 20, die die Projektions- oder Beleuchtungsfläche des Dachhimmels 2 bildet. Diese Bespannung ist beispielsweise aus Stoff, der gegebenenfalls eine leicht reflektierende Beschichtung oder Appretur besitzt. Die Bespannungsfarbe ist vorzugsweise hell, also weiß, silber, creme, so dass darauf gestrahltes farbiges Licht, das sich zur Bildung eines Ambientelichts besonders gut eignet, sich farbneutral abbildet.

Die Befestigungsleiste 10 weist zwei seitliche Befestigungsabschnitte 21 auf, über die sie himmelrückseitig verklebt ist. Zwischen diesen ist eine Nut 13 vorgesehen, in der ein vorspringender Steg 22 vorgesehen ist. Über die Länge der Befestigungsleiste sind z. B. mehrere solcher Stege voneinander beabstandet vorgesehen, die dann entsprechende Öffnungen in der Halteleiste durchgreifen.

Gezeigt ist ferner die Halteleiste 11, die ebenfalls zwei seitliche Abschnitte 23 aufweist, an denen im gezeigten Beispiel die Bespannung 20 fixiert ist, beispielsweise angeklebt oder an einer entsprechenden Nut befestigt ist. Die beiden Abschnitte 23 übergreifen das Himmelbauteil 18 im Bereich des Längsschlitzes 9. Durch den Längsschlitz 9 greifen die beiden Eingriffsstege 12 der Halteleiste 11, sie liegen an den Längsrändern der Nut 13 an. Der jeweilige Steg 22 erstreckt sich zwischen den Eingriffsstegen 12. Er durchgreift eine entsprechende Durchbrechung in der Halteleiste. Die Durchbrechungen sind entsprechend der Verteilung der Stege 22 längs der Halteleiste 11 ausgebildet.

Gezeigt ist ferner der Lichtleiter 4, der in der Befestigungsleiste 11 fixiert ist. In der Montagestellung drückt der Steg 22 gegen den Lichtleiter 4, er presst diesen gegen einen weiteren Steg 24 der Halteleiste 11. Dieser Steg 24 bildet eine Abschirmung 25, hinter welcher der Lichtleiter 4 versteckt aufgenommen ist, so dass er von im Fahrzeug befindlichen Personen nicht einsehbar ist. Er dient des Weiteren dazu, einen Lichtemissionsspalt oder - schlitz 26 zu realisieren, der sich hier zwischen dem Steg 24 und dem Abschnitt 23 ausbildet. Diese beiden Elemente respektive der Spalt 26 begrenzen den Lichtemissionspfad, über den Licht des Lichtleiters 4 seitlich emittiert aus der Halteleiste 11 strahlen kann, und zwar in Richtung auf den Dachhimmel 2 respektive die Bespannung 20. Ersichtlich wird über den Steg 24 sichergestellt, dass das emittierte Licht ausschließlich nach oben in Richtung des Dachhimmels 2 respektive der Bespannung emittiert wird, nicht aber in das Innere der Fahrgastzelle. Hierüber wird die in Fig. 3 gezeigte flache Ausleuchtung ermöglicht.

Fig. 5 zeigt schließlich die Fixierung der Halteleiste 11 an der Befestigungsleiste 10. Die Befestigungsleiste 10 weist über ihre Länge verteilt mehrere Durchbrechungen 27 auf, durch die entsprechend verteilt angeordnete Rastnasen 28, die an einem Eingriffssteg 12 der Halteleiste 11 ausgebildet sind, greifen. Die Rastnasen 28 verrasten hinter entsprechenden Rastabschnitten 29 der Befestigungsleiste 10. Hierüber ist also eine einfache Montage der Halteleiste möglich. Die Montage geschieht derart, dass zunächst der Lichtleiter 4 in die Halteleiste 11 eingelegt wird, wonach diese durch den Schlitz 9 in die bereits verklebte Befestigungsleiste 10 respektive die Nut 13 eingesteckt und dort verrastet wird. Hierbei, also während dieser Einsteckbewegung, wird der Lichtleiter 4 gegen den Steg 22 bewegt, der wie beschrieben in der Montagestellung, wenn also die Verrastung erfolgt ist, den Lichtleiter 4 gegen den jeweiligen Steg 24 drückt. Der Lichtleiter selbst ist dann also über den Steg 24 respektive die beiden Eingriffsstege 12 in Verbindung mit den Stegn 22 fixiert bzw. verklemmt.

In Fig. 5 sind ferner zwei Linien L1 und L2 gezeigt, die quasi die Grenzlinien darstellen, die das Beleuchtungsvolumen respektive den Lichtaustrittsbereich begrenzen. Die Linien L1, L2 werden durch die Geometrie und Anordnung des Abschnitts 23 respektive seiner Außenkontur und des Steges 24 respektive dessen Kontur bestimmt. Zwischen ihnen ergibt sich ein Beleuchtungswinkel β, der so ausgelegt ist, dass sich eine Ausleuchtung von etwas mehr als der halben Dachhimmelbreite (siehe Fig. 3) ergibt.

Ferner ist über die gestrichelte horizontale Linie L3 dargestellt, wie der Steg 24 den Lichtleiter 4 abschirmt. Denn bis zu dieser Ebene ist der Lichtleiter 4 vollständig hinter dem Steg 24, also der Abschirmung 25, versteckt. Erst wenn der Betrachter von oberhalb dieser Linie L3 in den Spalt 26 blickt, sieht er den Lichtleiter 4. Dies ist jedoch infolge des Verlaufs des Dachhimmels 2 und der Anordnung der Leuchteinrichtungen 3 nicht möglich.

Während das Ausführungsbeispiel zwei an den Längsseiten des Dachhimmels 2 angeordnete Leuchteinrichtungen 3 beschreibt, deren Lichtleiter 4 in Fahrzeuglängsrichtung verlaufen, ist es grundsätzlich auch möglich, zwei Leuchteinrichtungen im vorderen und hinteren Himmelbereich anzuordnen, sie erstrecken sich dann quer zur Fahrzeuglängsrichtung. Der Dachhimmel 2 würde dann in seiner Länge ausgeleuchtet. Das Funktionsprinzip wäre jedoch das gleiche, wie auch die Fixierung der Leuchteinrichtungen etc.

Wie insbesondere Fig. 3 zeigt, ist es mit Integration der erfindungsgemäßen Leuchteinrichtungen 3 möglich, den Dachhimmel 2 großflächig unmittelbar und ausschließlich zu beleuchten, mithin also ein angenehmes Ambientelicht über den Dachhimmel 2 in das Fahrzeuginnere zu verteilen. Die Farbe des Ambientelichts kann wie ausgeführt durch entsprechende Anwahl der jeweiligen Farb-LED eingestellt werden, sofern die jeweiligen Leuchteinrichtungen 5, 5a mehrere unterschiedlich farbige LEDs umfasst. Selbstverständlich ist hierüber auch die jeweilige Helligkeit, mit der die LED emittiert, nach Bedarf einstellbar.

## Patentansprüche

1. Kraftfahrzeug, umfassend einen Dachhimmel, wobei am oder benachbart zum Dachhimmel (2) wenigstens eine sich über zumindest einen Teil der Himmellänge oder Himmelbreite erstreckende, längliche Leuchteinrichtung (3) vorgesehen ist, die ihr Licht auf die zum Fahrzeuginneren weisende Himmelvorderseite derart abstrahlt, dass zumindest ein Teil der Himmelfläche beleuchtbar ist,
**dadurch gekennzeichnet,**
**dass** an der Rückseite des Dachhimmels (2) eine längliche Befestigungsleiste (10) angeordnet ist, an der wenigstens eine Halterung, an der die Leuchteinrichtung (3), gehaltert ist, befestigt ist, wobei die Halterung eine von der Himmelvorderseite her in die Befestigungsleiste (10) eingreifende Halteleiste (11), in die die Leuchteinrichtung (3), eingesetzt ist, ist.

2. Kraftfahrzeug nach Anspruch 1,
**dadurch gekennzeichnet,**
**dass** zwei in Fahrzeuglängsrichtung oder in Fahrzeugquerrichtung verlaufende und an beiden einander gegenüberliegenden Himmelseiten angeordnete Leuchteinrichtungen (3) vorgesehen sind.

3. Kraftfahrzeug nach Anspruch 2,
**dadurch gekennzeichnet,**
**dass** die oder jede Leuchteinrichtung (3) einen Lichtleiter (4) umfasst, über den seitlich Licht abstrahlbar ist.

4. Kraftfahrzeug nach einem der vorangehenden Ansprüche,
**dadurch gekennzeichnet,**
**dass** die Halteleiste (11) und die Befestigungsleiste (10) den Dachhimmel (2) zwischen sich aufnehmend miteinander verrastet sind.

5. Kraftfahrzeug nach einem der vorangehenden Ansprüche,
**dadurch gekennzeichnet,**
**dass** im Dachhimmel (2) ein Längsschlitz (9) vorgesehen ist, durch den die Halteleiste (11) hindurchgreift.

6. Kraftfahrzeug nach einem der vorangehenden Ansprüche,
**dadurch gekennzeichnet,**
**dass** die Leuchteinrichtung (3), insbesondere der Lichtleiter (4) nicht einsehbar hinter einer Abschirmung (25) angeordnet ist.

7. Kraftfahrzeug nach Anspruch 6,
**dadurch gekennzeichnet,**
**dass** die Halteleiste (11) einen die Leuchteinrichtung (3), insbesondere den Lichtleiter (4) übergreifenden, die Abschirmung (25) bildenden Steg (24) aufweist, hinter dem die Leuchteinrichtung (3), insbesondere der Lichtleiter (4) angeordnet ist.

8. Kraftfahrzeug nach einem der vorangehenden Ansprüche,
**dadurch gekennzeichnet,**
**dass** der Dachhimmel (2) eine als Beleuchtungsfläche dienende Bespannung (20), die vor einem stabilen Himmelbauteil (19) verläuft, aufweist.

9. Kraftfahrzeug nach Anspruch 8,
**dadurch gekennzeichnet,**
**dass** die Bespannung (20) an einer seitlich verlaufenden Halteleiste (11) angeordnet ist.

10. Kraftfahrzeug nach einem der vorangehenden Ansprüche,
**dadurch gekennzeichnet,**
**dass** über die Leuchteinrichtung (3), insbesondere den Lichtleiter (4) unterschiedlich farbiges Licht auf den Dachhimmel (2) abstrahlbar ist.

11. Kraftfahrzeug nach Anspruch 10,
**dadurch gekennzeichnet,**
**dass** mehrere unterschiedlich farbiges Licht emittierende, separat ansteuerbare Lichtquellen (5), deren Licht in die Leuchteinrichtung (3), insbesondere den Lichtleiter (4) einkoppelbar ist, vorgesehen sind.

12. Kraftfahrzeug nach einem der vorangehenden Ansprüche,
**dadurch gekennzeichnet,**
**dass** die Helligkeit der Leuchteinrichtung (3) variierbar ist.

## Claims

1. Motor vehicle comprising a roof liner, wherein on or adjacent to the roof liner (2) there is provided at least one elongate illumination device (3) which extends over at least a portion of the liner length or liner width and which radiates its light to the front liner side facing the inner side of the vehicle in such a manner that at least a portion of the liner face can be illuminated,
**characterised in that**
there is arranged at the rear side of the roof liner (2) an elongate securing bar (10) to which at least one retention member, on which the illumination device (3) is retained, is secured, wherein the retention member is a retention bar (11) which engages from the front liner side in the securing bar (10) and in which the illumination device (3) is inserted.

2. Motor vehicle according to claim 1,
**characterised in that**
two illumination devices (3) which extend in the longitudinal vehicle direction or in the transverse vehicle direction and which are arranged on both mutually opposing liner sides are provided.

3. Motor vehicle according to claim 2,
**characterised in that**
the or each illumination device (3) comprises a light guide (4) via which light can laterally be emitted.

4. Motor vehicle according to any one of the preceding claims,
**characterised in that**
the retention bar (11) and the securing bar (10) are engaged with each other so as to receive the roof liner (2) between them.

5. Motor vehicle according to any one of the preceding claims,
**characterised in that**
in the roof liner (2) there is provided a longitudinal slot (9) through which the retention bar (11) engages.

6. Motor vehicle according to any one of the preceding claims,
**characterised in that**
the illumination device (3), in particular the light guide (4), is arranged behind a screen (25) so as not to be visible.

7. Motor vehicle according to claim 6,
**characterised in that**
the retention bar (11) has a web (24) which engages over the illumination device (3), in particular the light guide (4), and which forms the screen (25) and behind which the illumination device (3), in particular the light guide (4), is arranged.

8. Motor vehicle according to any one of the preceding claims,
**characterised in that**
the roof liner (2) has a cover (20) which acts as an illumination face and which extends in front of a stable liner component (19).

9. Motor vehicle according to claim 8,
**characterised in that**
the cover (20) is arranged on a retention bar (11) which extends laterally.

10. Motor vehicle according to any one of the preceding claims,
**characterised in that**
via the illumination device (3), in particular the light guide (4), differently coloured light can be emitted onto the roof liner (2).

11. Motor vehicle according to claim 10,
**characterised in that**
a plurality of light sources (5) which emit differently coloured light and which can be controlled separately and whose light can be coupled into the illumination device (3), in particular the light guide (4), are provided.

12. Motor vehicle according to any one of the preceding claims,
**characterised in that**
the brightness of the illumination device (3) can be varied.

## Revendications

1. Véhicule automobile, comprenant un ciel de toit, dans lequel il est prévu sur ou au voisinage du ciel de toit (2) au moins un dispositif lumineux longitudinal (3) s'étendant sur au moins une partie de la longueur ou de la largeur du ciel, lequel dispositif rayonne sa lumière sur le côté avant du ciel tourné vers l'intérieur du véhicule en sorte qu'au moins une partie de la surface du ciel puisse être éclairé,
**caractérisé en ce que**,
l'on agence sur le côté arrière du ciel de toit (2) une moulure de fixation longitudinale (10) sur laquelle est fixée au moins une attache sur laquelle est supporté le dispositif lumineux (3), dans lequel l'attache est une moulure de support (11) s'accrochant depuis le côté avant du ciel dans la moulure de fixation (10), dans laquelle moulure de support est inséré le dispositif lumineux (3).

2. Véhicule automobile selon la revendication 1,
**caractérisé en ce que**,
il est prévu deux dispositifs lumineux (3) s'étendant dans la direction longitudinale ou dans la direction transversale du véhicule et agencés sur les deux côtés du ciel opposés l'un à l'autre.

3. Véhicule automobile selon la revendication 2,
**caractérisé en ce que**,
le ou chaque dispositif lumineux (3) comprend un guide-lumière (4) via lequel la lumière peut rayonner latéralement.

4. Véhicule automobile selon l'une quelconque des revendications précédentes,
**caractérisé en ce que**,
la moulure de support (11) et la moulure de fixation (10) sont enclenchées l'une avec l'autre de manière à contenir le ciel de toit (2) entre elles.

5. Véhicule automobile selon l'une quelconque des revendications précédentes,
**caractérisé en ce que**,
il est prévu dans le ciel de toit (2) une fente longitudinale (9) à travers laquelle s'engage la moulure de support (11).

6. Véhicule automobile selon l'une quelconque des revendications précédentes,
**caractérisé en ce que**,
le dispositif lumineux (3), en particulier le guide-lumière (4), est agencé de manière non visible derrière un écran (25).

7. Véhicule automobile selon la revendication 6,
**caractérisé en ce que**,
la moulure de support (11) présente une barrette (24) recouvrant le dispositif lumineux (3), en particulier le guide-lumière (4), et formant l'écran (25), derrière laquelle barrette est agencé le dispositif lumineux (3), en particulier le guide-lumière (4).

8. Véhicule automobile selon l'une quelconque des revendications précédentes,
**caractérisé en ce que**,
le ciel de toit (2) présente un entoilage (20) servant de face d'éclairage, qui s'étend devant une pièce de ciel stable (19).

9. Véhicule automobile selon la revendication 8,
**caractérisé en ce que**,
l'entoilage (20) est agencé sur une moulure de support (11) s'étendant latéralement.

10. Véhicule automobile selon l'une quelconque des revendications précédentes,
**caractérisé en ce que**,
de la lumière de différentes couleurs venant du dispositif lumineux (3), en particulier du guide-lumière (4) peut rayonner sur le ciel de toit (2).

11. Véhicule automobile selon la revendication 10,
**caractérisé en ce que**,
il est prévu plusieurs sources de lumière (5) à commandes séparées émettant de la lumière de différentes couleurs, dont la lumière peut être injectée dans le dispositif lumineux (3), en particulier dans le guide-lumière (4).

12. Véhicule automobile selon l'une quelconque des revendications précédentes,
**caractérisé en ce que**,
la luminosité du dispositif lumineux (3) est variable.
